# EUROPÄISCHE PATENTSCHRIFT

(11) **EP 0 669 746 B1**
(45) Veröffentlichungstag und Bekanntmachung des Hinweises auf die Patenterteilung: **04.06.1997**
(21) Anmeldenummer: 95102512.1
(22) Anmeldetag: 22.02.1995
(51) Int. Cl.: H04M 1/72, H04M 11/06

(54) **Personalcomputer mit einer Verbindung zu einem Kommunikationsendgerät eines drahtlosen Fernsprechsystems**
Personal computer with a connection to a communications terminal of a cordless telephone system
Ordinateur personnel avec une connexion à un terminal de communication d'un réseau téléphonique sans fil

(30) Priorität: 28.02.1994 DE 4406507
(43) Veröffentlichungstag der Anmeldung: 30.08.1995
(73) Patentinhaber: SIEMENS AKTIENGESELLSCHAFT, 80333 München (DE)
(72) Erfinder: Langmantel, Ernst, Dipl.-Ing., A-1210 Wien (AT)

(56) Entgegenhaltungen:
- EP-A- 0 619 669
- EP-A- 0 632 636
- WO-A-93/07684
- DE-U- 9 215 403
- MOTOROLA TECHNICAL DEVELOPMENTS, Bd. 20, Oktober 1993, Schaumburg, Illinois, US, SS. 110-111, XP 000403841; W.S. HUI ET AL.: 'CT2 BASE AND HANDSET WITH BUILT-IN MODEM'

## Beschreibung

Die Erfindung betrifft ein Kommunikationssystem mit einem Personalcomputer, dem zumindest ein drahtlos an eine Basisstation angeschlossenes Kommunikationsendgerät zugeordnet ist, wobei die Basisstation mit einer Kommunikationsanlage verbunden ist.

Drahtlose Fernsprechsysteme umfassen eine Basisstation - bzw. ein Festteil -, an die über eine Funkverbindung ein oder mehrere Kommunikationsendgeräte - bzw. Mobilteile - angeschlossen sind. Die Funkübertragung erfolgt beispielsweise gemäß dem DECT - Standard (Digital European Cordless Telephony) oder dem GSM - Standard (Group Special Mobile). In diesen Standards sind neben den funktechnischen Festlegungen die Kanalstrukturen für einen drahtlosen Anschluß mehrerer Kommunikationsendgeräte definiert. Die Basisstationen sind mit Hilfe bekannter Übertragungstechniken - z.B. analoge oder digitale Übertragungsverfahren - über ein oder mehrere Verbindungen mit einer Kommunikationsanlage - insbesondere einer Fernsprechnebenstellenanlage - verbunden. Hierzu ist die Kommunikationsanlage mit analogen a/b - Schnittstellen oder mit digitalen ISDN - Schnittstellen ausgestattet.

Bei einer Zuordnung eines Kommunikationsendgerätes eines drahtlosen Fernsprechsystems zu einem Personalcomputer, bei dem das Kommunikationsendgerät im Sinne eines schnurlosen Hörers für einen Personalcomputer wirkt - PC-Telefon -, sind in diesem zusätzliche Programme und eine Fernsprechkarte installiert, an die sowohl die Kommunikationsanlage als auch die Basisstation angeschlossen ist. Durch diese Zuordnung wird der Anschluß einer Basisstation durch den Personalcomputer geführt, wodurch die Signalisierung vom Kommunikationsendgerät zur Kommunikationsanlage und umgekehrt im Personalcomputer mitgelesen, an dessen Bildschirm visualisiert und beeinflußt werden kann. Darüber hinaus kann die Signalisierung für das zugeordnete Kommunikationsendgerät vollständig durch den Personalcomputer abgewickelt werden. Dies bedeutet, daß die Signalisierungsinformationen - z.B. Wahlinformationen - im Personalcomputer bedieneroberflächengesteuert - z.B. mit Hilfe der Eingabetastatur - gebildet und an die Kommunikationsanlage übermittelt werden. Aufgrund der komfortablen Bedieneroberfläche und Visualisierung am Bildschirm des Personalcomputers wird eine komfortable Signalisierung für die zugeordneten Kommunikationsendgeräte erreicht und zusätzlich sind unterschiedliche, die Signalisierung unterstützende Funktionen - z.B. ein Telefonverzeichnis mit Suchprozeduren - komfortabel realisierbar.

Eine derartige Kommunikationsanordnung eines Personalcomputers mit einem zugeordneten drahtlosen Fernsprechsystem erfordert einen erheblichen programmtechnischen und schaltungstechnischen Aufwand im Personalcomputer - zusätzliche Fernsprechkarte einschließlich der Programme.

Aus dem deutschen Gebrauchsmuster G 92 15 403.4 ist ein Funkkomforttelefon zum Erweitern des Bedienkomforts eines ergonomischen Handapparates bekannt.

Die der Erfindung zugrundeliegende Aufgabe besteht darin, die Einbeziehung eines Personalcomputers für eine komfortable Bedieneroberfläche eines Konmunikationsendgerätes eines drahtlosen Fernsprechsystems zu verbessern. Die Aufgabe wird ausgehend von einem Kommunikationssystem gemäß den Merkmalen des Oberbegriffs des Patentanspruchs 1 durch dessen kennzeichnende Merkmale gelöst.

Der wesentliche Aspekt der Erfindung ist darin zu sehen, daß das zumindest eine Kommunikationsendgerät an den Personalcomputer über eine Verbindung angeschlossen ist, und daß das zumindest eine Kommunikationsendgerät derart ausgestaltet ist, daß die von der Kommunikationsanlage drahtlos an dieses Kommunikationsendgerät übermittelten Signalisierungsinformationen über die Verbindung an den Personalcomputer und/oder in diesem Kommunikationsendgerät gebildete oder gespeicherte oder im Personalcomputer im Sinne eines Telefonbuchs oder einer Leistungsmerkmalsteuerung gespeicherte und visualisierte, durch eine Signalisierungsroutine ausgelesene und über die Verbindung übermittelte Signalisierungsinformationen an die Kommunikationsanlage gesteuert werden.

Zusätzlich können die in dem zumindest einen Komnunikationsendgerät gebildeten oder gespeicherten Signalisierungsinformationen über die Verbindung an den Personalcomputer übermittelt werden und/oder die vom Personalcomputer (PC) über die Verbindung an das zumindest eine Kommunikationsendgerät übermittelten Signalisierungsinformationen in diesem visualisiert oder gespeichert werden - Anspruch 2. Hierdurch ist zusätzlich eine Anzeige der gebildeten oder gespeicherten Signalisierungsinformationen in der jeweils anderen Einrichtung möglich.Insbesondere eine zusätzliche Visualisierung der im Kommunikationsendgerät gebildeten oder gespeicherten Signalisierungsinformationen im Personalcomputer ermöglicht eine vielfältige Weiterverarbeitung der Signalisierungsinformationen - z.B. zusätzliche Speicherung für eine Wahlwiederholung oder ein Telefonbuch usw. Des weiteren wird der Aufwand für die Herstellung einer komfortablen Bedieneroberfläche für das Bilden, Anzeigen und Auswählen von Signalisierungsinformationen erheblich verringert.

Gemäß vorteilhafter Weiterbildungen der Erfindung ist die Verbindung durch eine flexible, steckbare Leitung - Anspruch 3 - oder durch eine drahtlose Übertragung - Anspruch 7 - realisiert. Vorteilhafte drahtlose Übertragungssysteme stellen das Infrarot- und das Funkübertragungssystem - Anspruch 8 - dar. Zu beachten ist hierbei, daß insbesondere bei einem Einsatz eines Funkübertragungssystems die Funkeigenschaften, d.h. insbesondere die Funkfrequenz derart bestimmt sind, daß die drahtlose Übertragung zwischen der Basisstation und dem zumindest einen drahtlos angeschlossenen Kommunikationsendgerät nicht beeinflußt wird bzw. ungestört bleibt. Die Realisierungen der Verbindung durch flexible, steckbare Leitungen oder durch drahtlose Verbindungen setzen sowohl im Personalcomputer als auch in den Kommunikationsendgeräten jeweils Signalisierungsschnittstellen bzw. interne Signalisierungsschnittstellen voraus. Eine Signalisierungsschnittstelle ist vorteilhaft durch eine personalcomputergerechte serielle Datenschnittstelle realisiert - Ansprüche 4 bis 6 und 9.

Durch die Verbindung zwischen dem Personalcomputer und einem zugeordneten Kommunikationsendgerät und dem Realisieren einer Signalsierungsschnittstelle in dem Kommunikationsendgerät und im Personalcomputer kann auf eine aufwendige Fernsprechkarte im Personalcomputer verzichtet werden. Desweiteren kann bei einer vorteilhaften Benutzung einer personalcomputergemäßen seriellen Datenschnittstelle, insbesondere die V.24-Schnittstelle als Signalisierungsschnittstelle, die in fast jedem Personalcomputer zur Verfügung steht, lediglich durch Einbringen geeigneter Programme die Zuordnung eines Kommunikationsendgerätes eines drahtlosen Fernsprechsystems zu einem Personalcomputer bewirkt werden. Da eine Realisierung der Signalisierungsschnittstelle im Kommunikationsendgerät des drahtlosen Fernsprechsystems aufgrund der bereits vorhandenen, mitbenutzbaren Komponenten durch erheblich geringeren, insbesondere schaltungstechnischen Aufwand gegenüber einer Realisierung mit einer Fernsprechkarte erreicht wird, stellt das erfindungsgemäße Kommunikationssystemkonzept mit Signalisierungsschnittstellen im Kommunikationsendgerät und im Personalcomputer eine besonders wirtschaftliche Konzeption dar. Ein weiterer wesentlicher Vorteil der erfindungsgemäßen Konzeption gegenüber einer Lösung mit Fernsprechkarten ist darin zu sehen, daß bei einem Ausfall des Personalcomputers die Funktionsfähigkeit des zugeordneten Kommunikationsendgerätes uneingeschränkt erhalten bleibt.

Im folgenden wird das erfindungsgemäße Verfahren anhand dreier Blockschaltbilder näher erläutert. Dabei zeigen
- Fig. 1: ein Kommunikationssystem mit einer Kommunikationsanlage, einer Basisstation und mit einem mit einem Kommunikationsendgerät verbundenen Personalcomputer,
- Fig. 2: ein Kommunikationssystem mit einer Kommunikationsanlage, einer Basisstation und mit einem mit einem Kommunikationsendgerät "drahtlos" verbundenen Personalcomputer, und
- Fig. 3: ein Blockschaltbild eines Kommunikationsendgerätes.

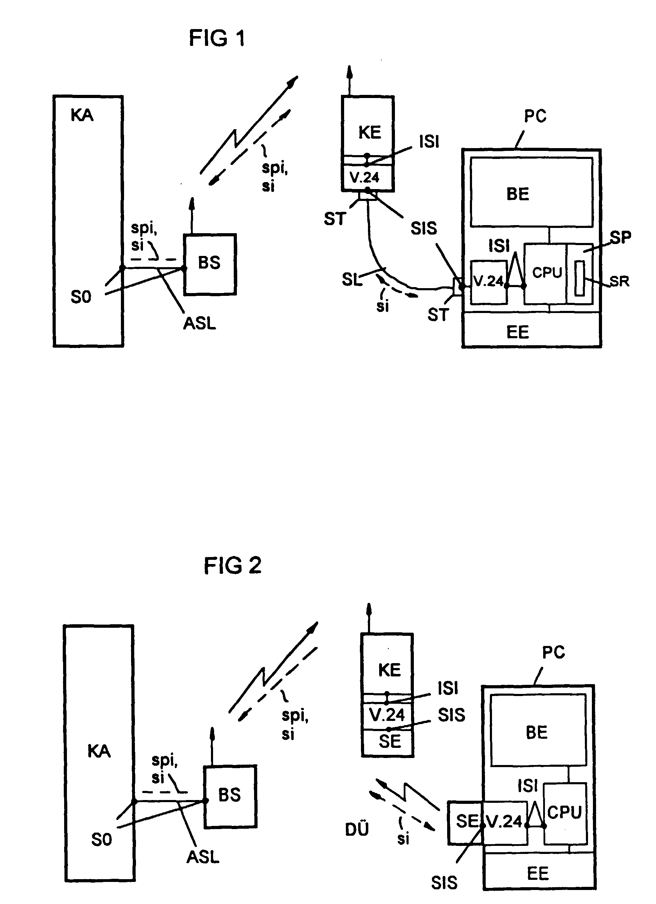

Fig. 1 zeigt eine Kommunikationsanlage KA, an die über eine Anschlußleitung ASL eine Basisstation BS eines drahtlosen Fernsprechsystems angeschlossen ist. Die Kommunikationsanlage KA stellt beispielsweise eine private Fernmeldenebenstellenanlage dar, die für den Anschluß der Basisstation BS mit einer ISDN-gemäßen S0-Schnittstelle S0 ausgestattet ist. Analog hierzu weist die Basisstation BS eine gleichartig realisierte S0-Schnittstelle S0 auf.

An die Basisstation BS ist drahtlos, d.h. über eine Funkverbindung, zumindest ein Kommunikationsendgerät KE angeschlossen - im Ausführungsbeispiel ist beispielhaft ein Kommunikationsendgerät KE dargestellt. Für das Ausführungsbeispiel sei weiterhin angenommen, daß die Funkverbindung und die Kanalstrukturen innerhalb der Funkverbindung gemäß dem DECT-Standard realisiert sind. Dies bedeutet, daß an die Basisstation BS drahtlos zwölf Kommunikationsendgeräte KE mit bidirektionaler Sprachübertragung blockierungsfrei anschließbar sind. Über die Funkverbindung werden die in den Kommunikationsendgeräten KE gebildeten und die von der Kommunikationsanlage KA übermittelten Signalisierungsinformationen si sowie die bidirektional zu übermittelnden Sprachinformationen spi übertragen.

Das Kommunikationsendgerät KE weist zusätzlich eine Signalisierungsschnittstelle SIS auf, die mit einer gleichartigen Signalisierungsschnittstelle SIS eines Personalcomputers PC verbunden ist. Vorteilhaft ist diese Signalisierungsschnittstelle SIS durch eine CCITT-Schnittstelle V.24 realisiert, die in einem Personalcomputer PC üblicherweise verfügbar ist. Im Personalcomputer PC und im Kommunikationsendgerät KE ist die Signalisierungsschnittstelle SIS durch ein Schnittstellenmodul V.24 realisiert. In diesem Schnittstellenmodul V.24 wird die Signalisierungsschnittstelle SIS physikalisch realisiert, d.h. die Schnittstellenleitungen installiert und die Eigenschaften der kommunikationsendgeräteinternen bzw. der personalcomputerinternen Signalisierungsschnittstelle ISI werden an die elektrischen Eigenschaften der Signalisierungsschnittstelle SIS angepaßt. Die Signalisierungsschnittstelle SIS des Kommunikationsendgerätes KE und die des Personalcomputers PC sind über eine flexible Leitung SL verbunden. Diese flexible Leitung SL ist entsprechend der Signalisierungsschnittstelle SIS ausgestaltet - insbesondere Anzahl der Drähte - und weist zumindest ein Steckelement ST auf. Das Steckelement ST ist entweder dem Kommunikationsendgerät KE oder dem Personalcomputer PC zugewandt. Dies bedeutet, das die Signalisierungsschnittstelle SIS am Personalcomputer PC oder am Kommunikationsendgerät KE durch eine zum Steckelement ST ausgebildetes Gegensteckelement realisiert ist. Vorteilhaft ist die Signalisierungsschnittstelle SIS am Kommunikationsendgerät KE als eine Steckverbindung ST ausgestaltet, da hierbei die Mobilität des Kommunikationsendgerätes KE weitgehend erhalten bleibt. Alternativ sind beide Signalisierungsschnittstellen SIS durch Steckverbindungen ST realisierbar.

Das Schnittstellenmodul V.24 ist im Personalcomputer PC über die interne Signalisierungsschnittstelle ISI mit einem Mikroprozessorsystem CPU verbunden. Ein Personalcomputer PC weist bekannterweise weiterhin eine Eingabeeinrichtung EE - die bekannte Eingabetastatur bzw. Maus - und eine Bildschirmeinrichtung BE auf.

Erfindungsgemäß werden mit einer in einem Speicher SP des Mikroprozessorsystems CPU gespeicherten Signalisierungsroutine SR, die beispielsweise mit Hilfe der Eingabeeinrichtung EE eingegebenen Signalisierungsinformationen si - z.B. Wählinformationen - an die Bildschirmeinrichtung BE gesteuert und dort angezeigt. Alternativ ist mit Hilfe der Signalisierungsroutine SR beispielsweise aus einem im Speicher SP gespeicherten Telefonbuch eine Signalisierungsinformation si, d.h. eine Rufnummer, auswählbar und an der Bildschirmeinrichtung BE anzeigbar. Nach einer weiteren Eingabe werden die Signalisierungsinformationen si über das Kommunikationsendgerät KE drahtlos an die Basisstation BS und von dort an die Kommunikationsanlage KA übermittelt und in dieser im Sinne eines Verbindungsaufbaus beispielsweise mit einem weiteren, an der Kommunikationsanlage KA angeschlossenen, nicht dargestellten Kommunikationsendgerät KE bewertet. Dies bedeutet, daß für eines der diesem Personalcomputer PC zugeordneten Kommunikationsendgeräte KE ein Verbindungsaufbau auf komfortable Weise durchgeführt werden kann. Des weiteren können zusätzliche Leistungsmerkmale während oder vor einer Kommunikationsbeziehung zwischen den Kommunikationsendgeräten KE mit Hilfe des Personalcomputers PC aufgrund zusätzlich implementierter Bedienerführungsroutinen wesentlich komfortabler gesteuert werden.

Fig. 2 zeigt ein gleichartig wie in Fig. 1 realisiertes Kommunikationssystem, jedoch ist anstelle der flexiblen Leitung SL mit zumindest einem Steckelement ST ein weiteres drahtloses Übertragungssystem DÜ vorgesehen. Das drahtlose Übertragungssystem DÜ weist jeweils eine Sende-/Empfangseinrichtung SE auf, die beispielsweise jeweils mit der Signalisierungsschnittstelle SIS verbunden ist. Die Sende- /Empfangseinrichtung ist bei entsprechender Ausgestaltung alternativ direkt an die personalcomputer- und kommunikationsendgeräteintere Signalisierungsschnittstelle ISI anschließbar. Hierbei entspricht die interne Siegnalisierungsschnittstelle ISI prozedural der Signalisierungsschnittstelle SIS und hinsichtlich der physikalischen Ausprägung ist sie an die internen physikalischen Bedingungen - insbesondere elektrische Eigenschaften - angepaßt. Bei einem Anschluß der Sende-/Empfangseinrichtung SE an die interne Signalisierungsschnittstelle ISI kann auf das V.24-Schnittstellenmodul V.24 verzichtet werden.

Die Sende-/Empfangseinrichtung SE ist durch bekannte Sende- und Empfangseinrichtungen für eine drahtlose Übertragung gebildet. Vorzugsweise sind hierbei Infrarotsende- und Empfangseinrichtung vorgesehen, da bei einer komfortablen Signalisierung für ein zugeordnetes Kommunikationsendgerät KE sich dieses in unmittelbarer Nähe des Personalcomputers PC befindet. Eine Benutzung eines drahtlosen Infrarotübertragungssystem bietet zusätzlich den Vorteil, daß die hochfrequente, drahtlose Übertragung zwischen dem Kommunikationsendgerät KE und der Basisstation BS unbeeinflußt bleibt, d.h. nicht gestört wird. Alternativ sind die Sende- und Empfangseinrichtung durch weitere hochfrequente, drahtlose Sende-/Empfangseirichtungen SE realisierbar. Zu beachten ist hierbei, daß insbesondere die Übertragungsfrequenz derart bestimmt ist, daß die drahtlose Übertragung zwischen der Basisstation BS und dem Kommunikationsendgerät KE unbeeinflußt bleibt.

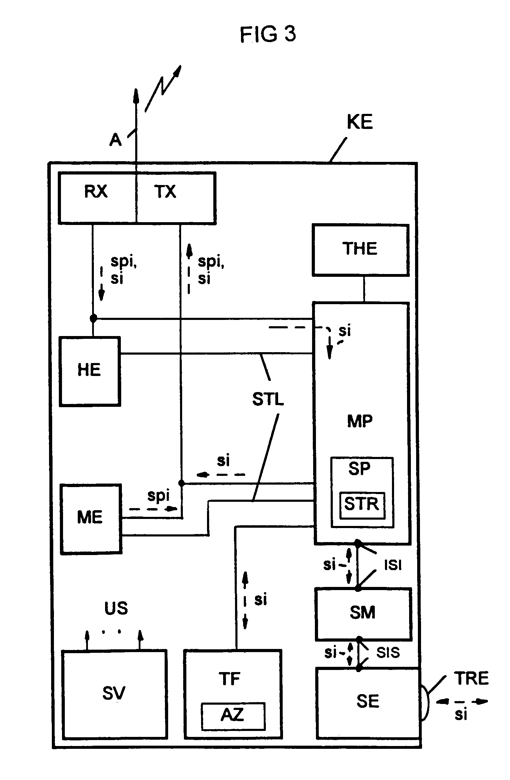

Fig. 3 zeigt ein Blockschaltbild eines Kommunikationsendgerätes KE für eine drahtlose Übermittlung der Signalisierungsinformationen si an den bzw. vom Personalcomputer PC. Das Kommunikationsendgerät KE weist einen Mikroprozessor MP mit einer zugeordneten Takt- und Hörtoneinrichtung THE, ein Empfangs- und Sendeteil RX, TX, eine Höreinrichtung HE, eine Mikrofoneinrichtung ME, eine Stromversorgung SV, ein mit einer Anzeigeeinheit AZ ausgestattetes Eingabemodul TF, ein Schnittstellenmodul SM und eine Sende-/Empfangseinrichtung SE auf. In der Mikrofoneinrichtung ME werden die von einem Mikrofon abgegebenen Signale verstärkt, komprimiert und mit Hilfe eines Mischers beispielsweise gemäß dem DECT-Standard strukturiert sowie in hochfrequente Signale umgesetzt und dem beispielsweise gemäß dem DECT-Standard realisierten Sendeteil TX zugeführt. Zur Überwachung und weiteren Steuerung werden diese Signale zusätzlich an den Mikroprozessor MP gesteuert. Über eine Antenne A werden die DECT-gemäßen, höchstfrequenten Signale an die Basisstation BS drahtlos übertragen.

In der Höreinrichtung HE werden die vom Mikroprozessor MP oder die vom Empfangsteil RX übermittelten höchfrequenten Signale verstärkt, demoduliert, dekomprimiert, wiederum verstärkt und an eine Höreinrichtung übermittelt. Zur Steuerung und Überwachung ist die Höreinrichtung HE und die Mikrofoneinrichtung ME jeweils über eine Steuerleitung STL mit dem Mikroprozessor MP verbunden.
In der Stromversorgung SV werden die Betriebsspannungen US für die einzelnen Komponenten des Kommunikationsendgerätes KE gebildet und geregelt. Die Stromversogung SV umfaßt einen Akkumulator und eine hierfür vorgesehene Ladeeinrichtung - nicht dargestellt.

In der Takt- und Hörtoneinrichtung THE werden die für den Betrieb des Mikroprozessors MP erforderlichen Taktsignale und fair eine Ausgabe an der Höreinrichtung HE vorgesehenen Hörtonsignale gebildet und an den Mikroprozessor übermittelt.

Der Mikroprozessor MP weist zusätzlich eine serielle, interne Signalisierungsschnittstelle ISI für die Übermittlung von Signalisierungsinformationen si auf. Diese Schnittstelle ISI ist mit einer gleichartig realisierten Schnittstelle ISI eines Schnittstellenmoduls SM verbunden. In diesem Schnittstellenmodul SM werden die Signalisierungsinformationen si hinsichtlich ihrer physikalischen Eigenschaften an eine Signalisierungsschnittstelle SIS angepaßt. Diese Signalisierungsschnittstelle SIS ist mit einer gleichartig realisierten Signalisierungsschnittstelle SIS der Sende-/Empfangseinrichtung SE verbunden, wobei die Signalisierungsschnittstelle SIS vorzugsweise durch eine V.24-Schnittstelle realisiert wird. Für das Auführungsbeispiel sei angenommen, daß die Sende-/Empfangseinrichtung SE durch eine nicht dargestellte Infrarotsende-/Empfangseinrichtung gebildet ist. Hierbei sind die Sende- und Empfangselemente TRE, z.B. eine Infrarotsendediode und eine Infrarotempfangsdiode, an der Außenwand des Kommunikationsendgerätes KE angeordnet.

Mit Hilfe einer in einem Speicher SP des Mikroprozessors MP gespeicherten Steuerungsroutine STR werden die in diesem Kommunikationsendgerät KE beispielsweise im Eingabemodul TF durch eine Tastatur gebildeten oder von der Basisstation BS drahtlos empfangenen Signalisierungsinformationen si über das Schnittstellenmodul SM und die Sende-/Empfangseinrichtung SE drahtlos an den Personalcomputer PC übermittelt. Analog hierzu werden die im Personalcomputer PC gebildeten oder gespeicherten sowie drahtlos übermittelten Signalisierungsinformationen si über die Sende-/Empfangseinrichtung SE und das Schnittstellenmodul SM und mit Hilfe der Steuerungsroutine SR drahtlos an die Basisstation BS gesteuert. Die vom Personalcomputer PC übermittelten Signalisierungsinformationen si sind zusätzlich an der im Eingagemodul TF angeordneten Anzeigeeinrichtung AZ visualisierbar. Anstelle der für eine Infrarotübertragung vorgesehenen Sende-/Empfangseinrichtung SE sind hochfrequente Sende- und Empfangseinrichtungen einsetzbar. Hierzu ist zusätzlich zur Antenne A für die drahtlose Übermittlung Kommunikationsendgerät KE - Basisstation BS eine weitere Antenne zu implementieren. Hierbei ist die Sende-/Empfangseinrichtung derart zu dimensionieren, daß die Übertragungssignale für die drahtlose Übertragung der Signalisierungsinformationen si zwischen dem Personalcomputer PC und dem Kommunikationsendgerät KE die drahtlose Übertragung zwischen dem Kommunikationsendgerät KE und der Basisstation BS nicht beeinflussen, d.h. nicht stören.

## Patentansprüche

1. Kommunikationssystem mit einer Kommunikationsanlage (KA) und zumindest einer mit der Kommunikationsanlage (KA) verbundenen Basisstation (BS),
- an die zumindest ein mobiles Komnunikationsendgerät (KE) drahtlos angeschlossen ist, das mit anderen Kommunikationsendgeräten (KE) selbständig Kommunikationsverbindungen auf- und abbaut, und
- über die im Komnunikationsendgerät (KE) bzw. in der Kommunikationsanlage (KA) gebildete Signalisierungsinformationen (si) zwischen Kommunikationsanlage (KA) und dem Kommunikationsendgerät (KE) ausgetauscht werden,
- wobei zumindest einem Kommunikationsendgerät (KE) ein Personalcomputer (PC) zugeordnet ist,
**dadurch gekennzeichnet,**
- daß das zumindest eine Komnunikationsendgerät (KE) an den Personalcomputer (PC) über eine Verbindung (SL,DÜ) anschließbar ist,
- daß das zumindest eine Komnunikationsendgerät (KE) derart ausgestaltet ist,
-- daß die von der Kommunikationsanlage (KA) drahtlos an dieses Kommunikationsendgerät (KE) übermittelten und in diesem verarbeitete Signalisierungsinformationen (si) zusätzlich über die Verbindung (SL,DÜ) an den Personalcomputer (PC) vermittelt werden und/oder
-- daß im Personalcomputer (PC) im Sinne eines Telefonbuches oder einer Leistungsmerkmalsteuerung gespeicherte und visualisierte, durch eine Signalisierungsroutine (SR) ausgelesene und über die Verbindung (SL,DÜ) an das zugeordnete Kommunikationsendgerät (KE) übermittelte Signalisierungsinformationen (si) in diesem Kommunikationsendgerät (KE) gespeichert und über die Basisstation (BS) an die Kommunikationsanlage (KA)
vermittelt werden.

2. Kommunikationssystem nach Anspruch 1,
**dadurch gekennzeichnet,**
daß das zumindest eine Kommunikationsendgerät (KE) derart ausgestaltet ist, daß die in dem zumindest einen Kommunikationsendgerät (KE) gebildeten oder gespeicherten Signalisierungsinformationen (si) zusätzlich über die Verbindung (SL,DÜ) an den Personalcomputer (PC) übermittelt werden und/oder die vom Personalcomputer (PC) über die Verbindung (SL,DÜ) an das zumindest eine Kommunikationsendgerät (KE) übermittelten Signalisierungsinformationen (si) im Kommunikationsendgerät (KE) visualisiert oder gespeichert werden.

3. Kommunikationssystem nach Anspruch 1 oder 2,
**dadurch gekennzeichnet,**
daß die Verbindung (SL,DÜ) zwischen dem Personalcomputer (PC) und dem zumindest einen Komnunikationsendgerät (KE) durch eine flexible Leitung (SL) mit zumindest einer Steckverbindung (ST) realisiert ist.

4. Kommunikationssystem nach Anspruch 3,
**dadurch gekennzeichnet,**
daß die flexible Leitung (SL) mit dem Personalcomputer (PC) und mit einem zugeordneten Komnunikationsendgerät (KE) jeweils über eine Signalisierungsschnittstelle (SIS) verbunden ist.

5. Komnunikationssystem nach Anspruch 4,
**dadurch gekennzeichnet,**
daß die Signalisierungsschnittstelle (SIS) durch eine serielle, personalcomputergemäße Datenschnittstelle (V.24) realisiert ist.

6. Kommunikationssystem nach Anspruch 5,
**dadurch gekennzeichnet,**
daß die personal computergemäße Datenschnittstelle (V.24) gemäß der CCITT-standardisierten V.24-Schnittstelle (V.24) realisiert ist.

7. Kommunikationssystem nach Anspruch 1 oder 2,
**dadurch gekennzeichnet,**
daß das zumindest eine Kommunikationsendgerät (KE) an den Personalcomputer (PC) durch eine drahtlose Verbindung (DÜ) anschließbar ist.

8. Kommunikationssystem nach Anspruch 7,
**dadurch gekennzeichnet,**
daß die drahtlose Verbindung (DÜ) durch ein Infrarotübertragungssystem oder ein Funkübertragungssystem realisiert ist, wobei die Funkübertragungseigenschaften derart bestimmt sind, daß die drahtlose Übertragung zwischen der Basisstation (BS) und den drahtlos angeschlossenen Kommunikationsendgeräten (KE) unbeeinflußt bleibt.

9. Kommunikationssystem nach einem Ansprüche 7 oder 8,
**dadurch gekennzeichnet,**
daß das Infrarotübertragungssystem (DÜ) oder das Funkübertragungssystem (DÜ) im Personalcomputer (PC) und in dem zumindest einem Kommunikationsendgerät (KE) an eine interne Signalisierungsschnittstelle (ISI) angeschlossen ist.

## Claims

1. Communications system having a communications installation (KA) and at least one base station (BS) connected to the communications installation (KA),
- to which base station there is cordlessly connected at least one mobile communications terminal (KE), which independently sets up and clears communication connections with other communications terminals (KE), and
- via which base station signalling information (si) formed in the communications terminal (KE) or in the communications installation (KA) is exchanged between communications installation (KA) and the communications terminal (KE),
- at least one communications terminal (KE) being assigned a personal computer (PC),
characterized
- in that the at least one communications terminal (KE) can be connected to the personal computer (PC) via a connection (SL, DÜ),
- in that the at least one communications terminal (KE) is designed in such a way
-- that the signalling information (si) transmitted cordlessly from the communications installation (KA) to this communications terminal (KE) and processed in the latter is additionally sent via the connection (SL, DÜ) to the personal computer (PC), and/or
-- that signalling information (si) stored and visually displayed in the personal computer (PC) in the sense of a telephone directory or a user facility control, read out by a signalling routine (SR) and transmitted via the connection (SL, DÜ) to the assigned communications terminal (KE) is stored in this communications terminal (KE) and is sent via the base station (BS) to the communications installation (KA).

2. Communications system according to Claim 1, characterized in that the at least one communications terminal (KE) is designed in such a way that the signalling information (si) formed or stored in the at least one communications terminal (KE) is additionally transmitted via the connection (SL, DÜ) to the personal computer (PC) and/or the signalling information (si) transmitted from the personal computer (PC) via the connection (SL, DÜ) to the at least one communications terminal (KE) is visually displayed or stored in the communications terminal (KE).

3. Communications system according to Claim 1 or 2, characterized in that the connection (SL, DÜ) between the personal computer (PC) and the at least one communications terminal (KE) is realized by a flexible line (SL) having at least one plug-in connection (ST).

4. Communications system according to Claim 3, characterized in that the flexible line (SL) is connected to the personal computer (PC) and to an assigned communications terminal (KE) in each case via a signalling interface (SIS).

5. Communications system according to Claim 4, characterized in that the signalling interface (SIS) is realized by a serial, personal-computer-compatible data interface (V.24).

6. Communications system according to Claim 5, characterized in that the personal-computer-compatible data interface (V.24) is realized according to the CCITT-standardized V.24 interface (V.24).

7. Communications system according to Claim 1 or 2, characterized in that the at least one communications terminal (KE) is connectable to the personal computer (PC) by a cordless connection (DÜ).

8. Communications system according to Claim 7, characterized in that the cordless connection (DÜ) is realized by an infrared transmission system or a radio transmission system, the radio transmission characteristics being determined in such a way that the cordless transmission between the base station (BS) and the cordlessly connected communications terminals (KE) remains uninfluenced.

9. Communications system according to one of Claims 7 or 8, characterized in that the infrared transmission system (DÜ) or the radio transmission system (DÜ) is connected in the personal computer (PC) and in the at least one communications terminal (KE) to an internal signalling interface (ISI).

## Revendications

1. Système de communication comportant une installation (KA) de communication et au moins une station (BS) de base, qui est reliée à l'installation (KA) de communication,
- à laquelle est raccordé sans fil au moins un terminal (KE) de communication mobile qui établit et supprime de manière autonome des liaisons de communication avec d'autres terminaux (KE) de communication,
- et par l'intermédiaire de laquelle des informations (si) de signalisation formées dans le terminal (KE) de communication et dans l'installation (KA) de communication sont échangées entre l'installation (KA) de communication et le terminal (KE) de communication,
- un ordinateur (PC) personnel étant associé à au moins un terminal (KE) de communication,
caractérisé en ce que
- le au moins un terminal (KE) de communication peut être raccordé à l'ordinateur (PC) personnel par l'intermédiaire d'une liaison (SL, DÜ),
- le au moins un terminal (KE) de communication,, est réalisé de manière que
-- les informations (si) de signalisation transmises sans fil de l'installation (KA) de communication à ce terminal (KE) de communication et traitées dans ce terminal soient de plus commutées à l'ordinateur (PC) personnel par l'intermédiaire de la liaison (SL, DÜ) et/ou que
-- des informations (si) de signalisation mémorisées et visualisées comme un répertoire téléphonique ou comme une commande de facilités offertes aux usagers, lues par une routine (SR) de signalisation et transmises par l'intermédiaire de la liaison (SL, DÜ) au terminal (KE) de communication, soient mémorisées dans ce terminal (KE) de communication et commutées à l'installation (KA) de communication par l'intermédiaire de la station (BS) de base.

2. Système de communication suivant la revendication 1, caractérisé en ce que le au moins un terminal (KE) de communication est réalisé de manière que les informations (si) de signalisation formées ou mémorisés dans le au moins un terminal de communication soient transmises à l'ordinateur (PC) personnel de plus par l'intermédiaire de la liaison (SL, DÜ) et/ou que les informations (si) de signalisation transmises, par l'intermédiaire de la liaison (SL, DÜ), de l'ordinateur (PC) personnel à l'au moins un terminal (KE) de communication soient visualisées ou mémorisées dans le au moins un terminal (KE) de communication.

3. Système de communication suivant la revendication 1 ou 2, caractérisé en ce que la liaison (SL, DÜ) entre l'ordinateur (PC) personnel et le au moins un terminal (KE) de communication est réalisée par une ligne (SL) souple comportant au moins une liaison (ST) d'enfichage.

4. Système de communication suivant la revendication 3, caractérisé en ce que la ligne (SL) souple est reliée à l'ordinateur (PC) personnel et à un terminal (KE) de communication associé par l'intermédiaire d'une interface (SIS) de signalisation.

5. Système de communication suivant la revendication 4, caractérisé en ce que l'interface (SIS) de signalisation est réalisée par une interface (V.24) de données sérielle, compatible avec l'ordinateur personnel.

6. Système de communication suivant la revendication 5, caractérisé en ce que l'interface (V.24) de données compatible avec l'ordinateur personnel est réalisée conformément à l'interface (V.24) V.24 normalisée CCITT.

7. Système de communication suivant la revendication 1 ou 2, caractérisé en ce que le au moins un terminal (KE) de communication peut être raccordé à l'ordinateur (PC) personnel par une liaison (DÜ) sans fil.

8. Système de communication suivant la revendication 7, caractérisé en ce que la liaison (DÜ) sans fil est réalisée par un système de transmission infrarouge ou par un système de transmission radioélectrique, les propriétés de transmission radioélectrique étant déterminées de manière que la transmission sans fil entre la station (BS) de base et les terminaux (KE) de communication raccordés sans fil ne soit pas influencée.

9. Système de communication suivant l'une des revendications 7 ou 8, caractérisé en ce que le système (DÜ) de transmission infrarouge ou le système (DÜ) de transmission radioélectrique sont raccordés, dans l'ordinateur (PC) personnel et dans le au moins un terminal (KE) de communication, à une interface (ISI) interne de signalisation.
